# EUROPEAN PATENT APPLICATION

(11) **EP 1 841 168 A1**
(43) Date of publication of application: **03.10.2007**
(21) Application number: 06290514.6
(22) Date of filing: 27.03.2006
(51) Int. Cl.: H04L 29/06, H04M 1/66

(54) **A personal token with an ability for interpreting user mishandlings**

(71) Applicant: Axalto International SAS, 92120 Montrouge (FR)
(72) Inventor: Chanay, Xavier, Axalto S.A., 92120 Montrouge (FR)
(74) Representative: Cour, Pierre

(57) **Abstract**

The invention relates to a personal token (40) comprising logic for checking a PIN/password as transmitted from a user interface (10,12) and for blocking operation of the token (40) when a predetermined number of erroneous PIN/password attempts have been transmitted to the token (40), characterized in that it comprises an interpreting logic which performs a detection of an unconscious mishandling of the user interface (10,12) so that the token (10) avoids to count such unconscious mishandling of the user interface (10,12) as a said erroneous PIN/password attempt concurring to reaching the said predetermined number of erroneous attempts.

## Description

The invention relates to personal tokens used for authenticating a user when such user accesses to a limited or a private resources equipment such as a mobile telecommunication network, a remote server storing secret data or even a protected area with limited physical access thereto.

The mostly known device of this type is the lC card such as for example a SIM card (Subscriber Identification Module) or a credit card, but it can also be a USB key, a mass memory card, or any kind of token carrying some necessary credentials.

Such tokens are typically compliant with international standard ISO7816.

Some tokens are protected against non authorized use by a PIN-checking piece of software, which compares a PIN code (Personal Identification Number) as provided to the card by the card-holder with a PIN code which is stored beforehand in the token.

Such PIN checking software is also programmed for limiting the number of attempts a user can make before entering the proper PIN code.

To that purpose, the token typically includes a memory location where a number of passed missed attempts is memorized, thereby constituting a counter of the missed attempts. The PIN checking software of the token increments or decrements a counter each time an incorrect PIN code is entered, and resets the counter each time the correct PIN code is entered.

The PIN checking software permanently compares the value in the counter with a pre-stored value. When the value in the counter reaches the pre-stored limit value, the PIN checking software initiates a blocking operation which results in the card refusing to perform the tasks it is intended for, such as using necessary credentials allowing the holder to access to a network as an example.

Despite the benefits of such a scheme, it appears to provide also some difficulties to a card holder. Indeed, the holder of the token is sometimes afraid to block the card himself and to thereby have to follow a long and heavy process for unblocking his personal token.

In such respect it is a main purpose of the invention to provide a personal token such as an IC card that the holder is less likely to block by his own actions, while maintaining a high level of security against unauthorized use.

This purpose is achieved by way of the invention as recited in the appended claims.

Other purposes, benefits and aspects of the invention will appear through the following description, which is made in reference to the appended figures, among which :
- Figure 1 depicts a terminal set in a network associated with a personal token according to the invention,
- Figure 2 is a diagram which represents a method of checking a PIN code according to the invention,

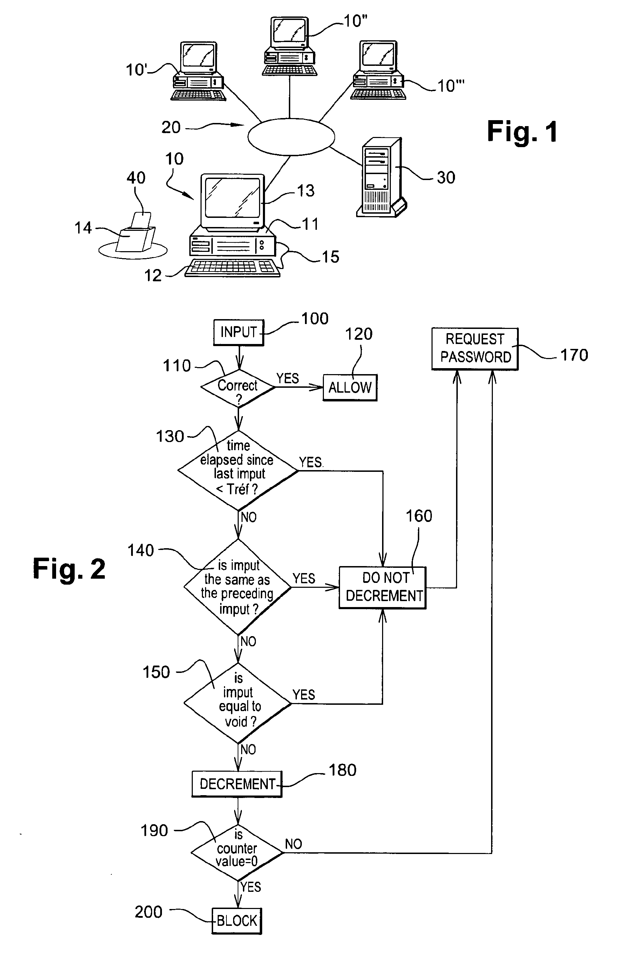

A preferred embodiment will now be described in the context of a computer network and in relation to a terminal for access to such network, as depicted schematically on figure 1.

Terminal 10 is equipped with a central processing unit 11, keyboard 12 and display unit 13, and with an lC card reader 14. Such lC card reader 14 is deported from the other parts of the computer 10, and linked with them by a communication and power wire 15. Other card readers are well-known and available, such as reader which may be integrated in the main body of a computer as an example.

Such terminal 10 is part of a network 20 comprising a set of other computers 10', 10", 10"' and comprising also a remote server 30. Server 30 typically stores secret information which can be read by remote computers such as computer 10 if an authorized user makes use of a personal card such as card 40. To that purpose the personal card 40 carries some necessary credentials which are challenged by the remote server 30 during what is called an authentication session.

The authentication session typically consists in the remote server 30 sending a random value RAND to the personal card 40 through computer 10.

The personal card 40 performs a pre-established calculation algorithm onto such random RAND which calculation algorithm is based on credentials as stored in the card. The card provides the result of the calculation to the remote server 30. The remote server 30 also stores the credentials of the card and is programmed for performing the same algorithm calculation using such credentials. The remote server 30 is therefore able to compare the result as provided by the card 40 with the result as calculated in the remote server 30 itself. When the two results match, the remote server 30 allows access to its content to the person who makes use of the computer 10 and has used the card 40 for authenticating herself.

Such authorization session is intended at authenticating the lC card as an authorized one. It is typically preceded by an authentication which consists in ensuring that the holder of the card is the authorized card-holder. To that purpose, a communication is set between the card-holder and the card 40 once the card has been introduced in the card reader 14, which consists in the card 40 requiring the user to type his PIN code (Personal Identification Number code) on the keyboard 12 of the computer 10. The card 40 stores a programmed PIN code in a secure location of its memory. The typed PIN code is transmitted by the terminal 10 to a piece of software in the card which compares the received PIN code with the pre-programmed PIN code.

If the two PIN codes match, then the card 40 accepts to perform the authentication session with the remote server 30 as described above. Such authentication session is thereby initiated by the card 40 which sends a request for this purpose to the remote server 30.

If the pre-programmed PIN code and the typed PIN code don't match, then the card 40 refuses to proceed with the authentication session and access to the content of the remote server 30 is thereby denied.

The card includes a memory location where a number of passed missed attempts is reflected, thereby constituting an indicator of the number of missed attempts. A software portion of the card decrements such attempts indicator everytime an incorrect PIN code is entered, and resets the attempts indicator to its original value each time the correct PIN code is entered by the card-holder.

This software portion permanently compares the value in the attempts indicator with a pre-stored value which is here equal to zero, the attempts indicator being a decrementing attempts indicator. When the attempts indicator value reaches the pre-stored value, i.e. zero, the software portion in charge of the checking actuates a blocking operation which results in the card refusing to perform the tasks it is intended for, such a as using the necessary credentials for allowing the holder to access the remote server 30.

So as to avoid that the card holder blocks his card himself and is thereby obliged to follow a long and heavy process for unblocking his card, the card according to the present preferred embodiment of the invention performs a set of operations which will be described hereafter in reference to figure 2.

This example is described in the context of a card used in a PC for accessing from remote to the server 30 containing secret data.

In this example, the server 30 stores the commercial data of a company, and the card-holder has to be an authorized employee of the company.

The remote access to the server 30 is performed here though the internet, for instance by the holder of the card while he is abroad.

The card-holder inserts his card in the card reader 14 and is expected to type his password on the keyboard 12 of the terminal 10.

After typing, the card-holder is expected to validate his password by actuating the "enter" key of the keyboard 12. Such two first actions are referenced as step 100 on figure 2.

A first operation 110 performed by the card consists in some logic of the card, typically consisting in a program stored in the memory of the card and the processor of the card running such program, testing whether the entered password is the expected password, i.e. is identical to the password which is pre-stored in the memory of the card.

In case the password is the expected password, then the card 40 accepts the holder of the card as the entitled card-holder and following process 120 can occur, i.e. launching an authenticating session with the remote server 30. Any other process may be allowed, in addition or in replacement to the authenticating session, such as access to protected data stored in the card 40. Such protected data may be directed to the holder of the card such as in case of a personal phonebook, or directed to the remote server such as in case of data reflecting the current level of ability of the card 40.

ln case the password appears to be different from the expected one, then the card 40 is expected to monitor the number of missed attempts which have already occurred. In case the number of missed attempts including this last one has reached the number of three, then the card does not allow any authenticating session and refuses any further attempt for password entry. The card is blocked.

As stated above, the memory of the card comprises a location for storing a numerical value which is initially equal to three, and which forms a decreasing indicator of the number of attempts for entry of the password. The card decreases the value of the attempts indicator each time the holder of the card inputs an incorrect password.

A logic module, here consisting in a set of instructions stored in the memory of the card and the processor of the card running such set of instructions, performs a series of operations for interpreting the password inputs as performed by the card-holder, and will thereafter be called interpreting module.

The present interpreting module has the ability to identify a password input which was not consciously desired by the holder of the card, i.e. which has chances to result form a mishandling by the holder or any other unproper approach of the holder of the card rather than a truly fraudulous attempt.

The interpreting module interprets such an attempt as not being detrimental to the initial rights of the card-holder for a certain number of attempts.

In other words, the card assesses whether a missed attempt results from such mishandling or -on the contrary- indeed appears as a conscious attempt by a non-entitled person.

To this end, the card 40 first examines the elapsed time since the last password entry. The card includes a clock and the operating system of the card is programmed for placing time repairs each time a password entry is performed. This way, the interpreting module of the card 40 is directly supplied with such time measurement between the current password entry and the last one.

The interpreting module then compares at step 130 the measured time with a prestored time value T_{ref}. Should the measured time be lower than the pre-stored time value, then the card interprets that the two consecutive entries have been performed with such a speed that would not have allowed the holder to type a password between the two entries, and therefore that the second password input results from the card-holder having kept the "enter" key actuated, or the card-holder having actuated several consecutive times the "enter" key, for example while being on the phone or as a result of a usual typing behavior. In such case, the interpreting module renounces to decrement the value of the attempts indicator.

As an alternate embodiment, the interpreting module may perform detection of a frequency of successive transmissions of password to the card which correponds to the case when the user maintains the validation element actuated, here the "enter" key. The detected rate is the rate at which a key of the keyboard of the PC launches pulses to the processing part of the PC and thereby initiates instructions to be emitted to the card. The rate may be detected when comprised between two frequency limits overlapping the pulse rate of the keyboard.

A still alternate embodiment consists in the card detecting a special message as delivered by the computer to the card in case the "enter" key is retained depressed by the user.

With the present embodiment, in case the time elapsed between the current attempt and the previous attempt is not low enough for being considered as a mishandling, i.e. when the elapsed time is higher than the pre-stored value T_{ref}, then the interpreting module carries out a further assessment 140 as to whether the missed attempt was conscious or not by the card holder.

This further assessment operation 140 consists in comparing the currently input password with the previously input password. To this end, the interpreting module controls a storage of the content of each incorrect password input in an especially dedicated location of the memory of the card. Such memory location is preferably in the non-volatile memory area of the card so that the follow-up of the consecutive attempts can be performed although the card is extracted or more generally not powered-up between two attempts.

Should the inputs of the two consecutive attempts be identical, then the interpreting module renounces to decrease the value of the attempts indicator. When the holder of the card enters twice the same erroneous password before he notices that he makes a mistake and possibly reminds the exact password, the card-holder thereby still keeps the possibility to make a new input.

lt indeed appears that some users may not notice that their password is not the correct one at the first refusal from the card, but may think instead that they have wrongly typed the password and wrongly again try with the still erroneous password. Through this process, some users try once again the same password and they notice that they did not make a mistake in typing letters of the password but instead a mistake in remembering the right password. For example, some users may make several attempts before noticing that they have used the password for accessing their bank account on the internet instead of the expected password for accessing a remote professional server such as server 30.

So as to avoid that a user may block his card this way, the interpreting module identifies the case when two repetitive attempts have been performed with the same password and the interpreting module renounces to decrease the attempts indicator in such a case. However, the interpreting module initiates a decrease of the attempts indicator in case of a password input which is different from the previous one, thereby duly protecting against varying trials which may be performed by a non authorized person.

Once the card has performed a test on the time elapsed between two attempts and a test on the comparative content of the two last consecutive attempts, and if these two tests do not reveal any unconscious mishandling from the card-holder, then the interpreting module manages at step 150 a further assessment of a possible unconscious mishandling.

Should the current attempt consist in the holder having validated without typing any kind of alphanumerical data as a password, then the interpreting module interprets the actuation of the "enter" key as an unconscious mistake from the holder. The attempts indicator is thereby maintained at the same value so that the holder still benefits from the same number of possible attempts.

Indeed, some users may actuate the enter key by mistake, for example for the purpose of simply de-actuating their automatic display of a screen saver. Some users may also erroneously actuate the "enter" key because they thought they had typed the password just before.

This way, the card checks at step 150 that the password window has not been validated although blank

In case anyone of these tests 130, 140, 150 lets appear that the missed attempt was due to an unconscious mishandling, then the interpreting module decides to let the value of the attempts indicator unchanged (step 160). The card then requests at step 170 the password again to the holder of the card.

In case none of these tests lets appear that the missed attempt is due to a mishandling, then the interpreting module interprets that the missed attempt may be an attempt by a non-authorized person, and the interpreting module duly triggers a decrement at step 180 of the value of the attempts indicator. Then, at step 190, the interpreting module checks whether the value of the attempts indicator is equal to null. In case the value of the attempts indicator is equal to null, then at step 200 the card gets blocked because of the number of attempts having reached the maximum authorized number. In case the value of the attempts indicator is still not arrived to null, then the interpreting module requests the password to be entered by the card-holder thereby triggering step 170.

Through these different tests 130, 140 and 150, the authentication token thereby detects a mishandling of a user interface inducing a series of validation handlings so that the token avoids to interpret said mishandling of the user interface as a true series of meaningful PIN/password attempts. Other tests are of course possible in the frame of the present invention, which may also provide a reliable indication on whether an incorrect password has been consciously or unconsciously prepared before being entered by the card-holder.

Although described as a token for accessing to the secret data in a remote server, the token may be intended for any other purpose, such as accessing to a telecommunication network in the case of a SIM card, or to a bank network in the case of a credit card.

## Claims

1. A personal token (40) comprising logic for checking a PIN/password as transmitted from a user interface (10,12) and for blocking operation of the token (40) when a predetermined number of erroneous PIN/password attempts have been transmitted to the token (40), **characterized in that** it comprises an interpreting logic which performs a detection (130,140,150) of an unconscious mishandling of the user interface (10,12) so that the token (10) avoids (160) to count such unconscious mishandling of the user interface (10,12) as a said erroneous PIN/password attempt concurring to reaching the said predetermined number of erroneous attempts.

2. The personal token (40) according to claim 1, **characterized in that** the interpreting logic performs a detection of a lapse of time between two password inputs which is lower than an authorized lapse of time (130) and discards at least an attempt as unconscious (160) in case of a said lapse of time being lower than the authorized one.

3. The personal token (40) according to claim 1, **characterized in that** the interpreting logic performs a detection of two consecutive attempts with identical PIN/password (140) and discards at least an attempt as unconscious (160) in such case.

4. The personal token (40) according to claim 1, **characterized in that** the interpreting logic performs a detection of an attempt with no content as PIN/password (150) and discards the attempt as unconscious (160) in such case.

5. The personal token (40) according to anyone of the preceding claims, **characterized** it is constituted as an lC card (40).

6. The personal token (40) according to anyone of the preceding claims, **characterized in that** the token (40) is connected to a terminal (10) in a network (20) and the token (40) is programmed for allowing access to secret data stored in a remote server (30) in the network (20).

7. The personal token (40) according to anyone of claims 1 to 5, **characterized in that** the token (40) is associated with a mobile communication terminal.

8. The personal token (40) according to anyone of claims 1 to 5, **characterized in that** the token is a credit card (40).
